# EUROPÄISCHE PATENTANMELDUNG

(11) **EP 1 054 411 A2**
(43) Veröffentlichungstag der Anmeldung: **22.11.2000**
(21) Anmeldenummer: 00201713.5
(22) Anmeldetag: 15.05.2000
(51) Int. Cl.: G21B 1/00

(54) **Thermisch hoch belastbares Bauteil**

(30) Priorität: 21.05.1999 AT 35799 U
(71) Anmelder: PLANSEE Aktiengesellschaft, 6600 Reutte, Tirol (AT)
(72) Erfinder: Plöchl, Laurenz, 9781 Oberdrauburg (AT); Rainer, Florian, 6600 Lechaschau (AT)
(74) Vertreter: Lohnert, Wolfgang, Dr.

(57) **Zusammenfassung**

Die Erfindung beschreibt ein thermisch hochbelastbares Bauteil oder Verbundbauteil, wie eine Divertorplatte für die "Erste Wand" eines Fusionsreaktors, das mindestens abschnittsweise aus Wolfram oder einer Wolframlegierung besteht. Erfindungsgemäß sind zur Verbesserung der Rissanfälligkeit die Abschnitte aus Wolfram oder einer Wolframlegierung nicht massiv, sondern als lamelliertes Paket ausgeführt.

## Beschreibung

Die Erfindung betrifft ein thermisch hochbelastbares Bauteil oder Verbundbauteil, wie eine Divertorplatte für die "Erste Wand" eines Fusionsreaktors, das mindestens abschnittsweise aus Wolfram bzw. einer Wolframlegierung besteht.

Thermisch hochbelastbare Bauteile, wie sie beispielsweise für die "Erste Wand" eines Fusionsreaktors eingesetzt werden, sind in der Regel als Verbundbauteil ausgeführt. Die dem Plasma zugewandte Seite dient als Hitzeschild und ist aus Materialien mit hohem Schmelzpunkt und guter Wärmeleitfähigkeit, wie Graphit oder metallische Werkstoffe, wie Wolfram oder Molybdän ausgeführt. Der an das Hitzeschild angrenzende Bereich des Bauteiles ist entweder als massive blockförmige Wärmesenke oder als kühlmitteldurchflossene, aktiv gekühlte Wärmesenke aus einem Material guter Wärmeleitfähigkeit mit deutlich niederem Schmelzpunkt, wie zum Beispiel aus Kupfer oder einer Kupferlegierung hergestellt.

Insbesondere Wolfram oder Wolframlegierungen sind aufgrund Ihrer hohen Massezahl, der guten Wärmeleitfähigkeit und dem höchsten Schmelzpunkt aller Metalle für thermisch hochbelastbare Bauteile insbesondere auch für die Anwendung im Divertor von Fusionsreaktoren gut geeignet. Die Nachteile von reinem Wolfram und teilweise auch von Wolframlegierungen liegen darin, dass sie spröde Werkstoffe mit vergleichsweise hoher Übergangstemperatur duktil/spröde sind. Aufgrund dieser Eigenschaften sind diese Werkstoffe äußerst rissanfällig bei Thermoschockbelastung, wie sie auch bei den beschriebenen thermisch hochbelastbaren Bauteilen vielfach auftritt, so dass Wolfram und Wolframlegierungen bisher nicht in größerem Umfang für thermisch hoch beanspruchte Bauteile zum Einsatz gekommen sind.

Die Aufgabe der vorliegenden Erfindung ist es daher, thermisch hochbelastbare Bauteile oder Verbundbauteile wie Divertorplatten für die "Erste Wand" eines Fusionsreaktors, die mindestens abschnittsweise aus Wolfram oder einer Wolframlegierung bestehen, hinsichtlich Ihrer Thermoschockbeständigkeit durch geeignete Maßnahmen deutlich zu verbessern.

Erfindungsgemäß wird dies dadurch erreicht, dass die Abschnitte aus Wolfram oder einer Wolframlegierung nicht massiv, sondern als lamelliertes Paket ausgeführt sind.
Durch diese konstruktive Ausgestaltung wird erreicht, dass die Teile aus Wolfram oder einer Wolframlegierung aufgrund der geringeren Dicke einer höheren spezifischen Thermoschockbelastung standhaften können.

In einer besonders vorteilhaften Ausgestaltung wird das lamellierte Paket aus einzelnen Blechabschnitten von 0.1 bis 2 mm Dicke ausgeführt.

Als Wolframlegierung hat sich insbesondere eine teilchenverfestigte Legierung mit
0.3 - 5 Vol % Lanthanoxid, Rest Wolfram bewährt. Bei Verwendung dieser Legierung wird zusätzlich auch noch durch den Werkstoff eine deutliche Verringerung der Rissbildung und Rissausbreitung im Vergleich zu reinem Wolfram erreicht.

In einer besonders vorteilhaften Ausgestaltung der Erfindung ist das thermisch hochbelastbare Verbundbauteil als eine aktiv gekühlte Einrichtung aus einem kühlmittelführenden Rohr aus Kupfer oder einer Kupferlegierung ausgeführt, das allseits von einem lamellierten Wolframteil umgeben ist.

Im folgenden wird die Erfindung anhand eines Herstellungsbeispiels und einer Figur näher erläutert.

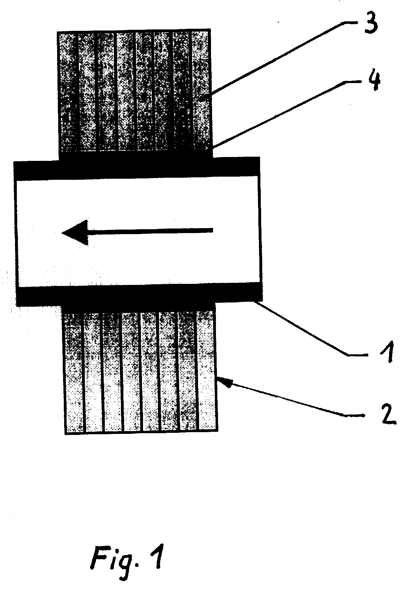

Fig. 1 zeigt die Prinzipzeichnung eines aktiv gekühlten Bauteiles für einen Fusionsreaktor.

### Herstellungsbeispiel:

Ein aktiv gekühltes Bauteil für einen Fusionsreaktor nach Fig. 1 aus einem kühlmittelführenden Rohr -1- aus einer Kupferlegierung und einem das Kupferrohr allseitig umschließenden Hitzeschild -2- aus einer Wolframlegierung mit 1 Vol % Lanthanoxid Rest Wolfram wurde wie folgt hergestellt:

Aus einem 0,5 mm dicken Blech aus der Wolframlegierung wurden durch Schneiden und Stanzen des Loches zur Aufnahme des Kupferrohres einzelne Wolframlamellen -3-hergestellt. Die einzelnen Lamellen -3- wurden in einer Vorrichtung zu einem 10 mm dicken Paket gestapelt und das Kühlloch mit einer 0,5 mm dicken Kupferschicht -4- nach einem Verfahren, wie es im Patent AT 400 909 beschrieben wird unter Vakuum hintergossen. Das derartig erhaltene Lamellenpaket aus der Wolframlegierung wurde durch Hochvakuumlöten mit einem durchgehenden Rohr -1- aus einer Kupferlegierung mechanisch und thermisch stabil verbunden. Das derartig hergestellte Bauteil wurde hinsichtlich Rissanfälligkeit bei thermischer Schockbeanspruchung getestet. Es wurde gefunden, dass Wärmeflüsse von bis zu 20 MW / m² bei mehr als 1000 thermischen Zyklen ohne Bruch des lamellierten Paketes aus der Wolframlegierung erreicht werden konnten.

## Patentansprüche

1. Thermisch hoch belastbares Bauteil oder Verbundbauteil wie eine Divertorplatte für die "Erste Wand" eines Fusionsreaktors, das mindestens abschnittsweise aus Wolfram oder einer Wolframlegierung besteht,
**dadurch gekennzeichnet**,
dass die Abschnitte aus Wolfram oder einer Wolframlegierung nicht massiv, sondern als lamelliertes Paket ausgeführt sind.

2. Bauteil oder Verbundbauteil nach Anspruch 1, dadurch gekennzeichnet, dass das lamellierte Paket aus einzelnen Blechabschnitten von 0,1-2 mm Dicke besteht.

3. Bauteil oder Verbundbauteil nach Anspruch 1 oder 2, dadurch gekennzeichnet, dass als Wolframlegierung eine teilchenverfestigte Legierung mit 0.3 - 0.5 % Lanthanoxid, Rest Wolfram verwendet wird.

4. Aktiv gekühltes Bauteil nach einem der Ansprüche 1-3, dadurch gekennzeichnet, dass das Verbundbauteil eine aktiv gekühlte Einrichtung aus einem kühlmittelführenden Rohr aus Kupfer oder einer Kupferlegierung ist, das allseitig von einem lamellierten Wolframteil umgeben ist.
